(19)

Europäisches Patentamt

European Patent Office

Office européen des brevets

(11) **EP 2 202 278 A1**

(12) **EUROPEAN PATENT APPLICATION**

(43) Date of publication:
**30.06.2010 Bulletin 2010/26**

(51) Int Cl.:
***C09C 1/36*** *(2006.01)*

(21) Application number: **09252873.6**

(22) Date of filing: **22.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **25.12.2008 JP 2008330928**

(71) Applicant: **Sakai Chemical Industry Co., Ltd.**
**Sakai-ku**
**Sakai-shi**
**Osaka 590-8502 (JP)**

(72) Inventors:
 • **Abe, Kazunobu**
  **Sakai-shi**
  **Osaka 590-8502 (JP)**

 • **Sugimoto, Kazumi**
  **Sakai-shi**
  **Osaka 590-8502 (JP)**
 • **Terabe, Atsuki**
  **Sakai-shi**
  **Osaka 590-8502 (JP)**
 • **Mikami, Masaru**
  **Sakai-shi**
  **Osaka 590-8502 (JP)**

(74) Representative: **Duckworth, Timothy John**
 **J.A. Kemp & Co.**
 **14 South Square**
 **Gray's Inn**
 **London WC1R 5JJ (GB)**

(54) **Titanium dioxide pigment and method for producing the same**

(57)    The invention provides a titanium dioxide pigment particle inhibited in photocatalytic activity and reduced in amount of volatile water which has on the surface a composite compound of alkaline earth meta complexed with the titanium dioxide in an amount of 0.1-20% by weight based on the weight of the titanium dioxide pigment particle in terms of oxide of the alkaline earth metal, wherein the composite compound is obtained by heating a compound of at least one of alkaline earth metals selected from magnesium, calcium, barium and strontium and a titanium dioxide particle at a temperature of 60°C or higher so that the alkaline earth metal is complexed with the titanium dioxide on the surface of the titanium dioxide pigment particle.

EP 2 202 278 A1

**Description**

Field of the Invention

The present invention relates to a titanium dioxide pigment, and in particular, relates to a titanium dioxide pigment particle having on the surface thereof a composite compound which is obtained by complexing an alkaline earth metal with the titanium dioxide and which is hence inhibited in photocatalytic activity and reduced in amount of volatile water.

Background Art

Titanium dioxide particles are known as a white pigment, ultraviolet ray shielding agent and the like, and in wide use for paint products, coloring agents for plastics products and so on. However, the titanium dioxide particles have photocatalytic activity so that paint compositions or resin compositions containing the titanium dioxide particles suffer gloss deterioration, chalking, discoloration or the like with time. Furthermore, the titanium dioxide particles hydrolyze resins with the volatile water which the particles contain.

Therefore, it has been conventionally proposed that the surface of titanium dioxide particle is treated with a hydrous oxide of silicon, aluminum, zirconium or the like to inhibit the photocatalytic activity of titanium dioxide particles to prevent oxidative decomposition of resins (for example, see Japanese Unexamined Patent Publication Nos. 7-292276 and 7-292277). However, a large amount of surface treatment is required to inhibit the photocatalytic activity of titanium dioxide particles, and such a large amount of surface treatment causes a problem that it increases the amount of volatile water which titanium dioxide particles contain, resulting in promoting the hydrolysis of resin when it is blended with the resin. Accordingly, the amount of surface treatment of titanium dioxide particles must be reduced if the amount of volatile water is to be reduced, but when the amount of surface treatment is reduced, the photocatalytic activity of titanium dioxide particles cannot be sufficiently inhibited.

No technique has hitherto been known which is capable of simultaneously inhibiting the photocatalytic activity of titanium dioxide particles and the amount of volatile water by surface treatment of titanium dioxide particles.

The invention has been completed to solve the above mentioned problems associated with the photocatalytic activity of titanium dioxide particles. Therefore, it is an object of the invention to provide a titanium dioxide pigment particle which is inhibited in photocatalytic activity as well as reduced in amount of volatile water. It is a further object of the invention to provide a method for producing such a titanium dioxide pigment particle.

Summary of the Invention

The invention provides a titanium dioxide pigment particle having on the surface a composite compound of alkaline earth metal complexed with the titanium dioxide in an amount of 0.1- 20% by weight based on the weight of the titanium dioxide pigment particle in terms of oxide of the alkaline earth metal, wherein the composite compound is obtained by heating a compound of at least one of alkaline earth metals selected from magnesium, calcium, barium and strontium and a titanium dioxide particle at a temperature of 60°C or higher so that the alkaline earth metal is complexed with the titanium dioxide on the surface of the titanium dioxide pigment particle.

The invention also provides a method for producing a titanium dioxide pigment particle which comprises heating a compound of at least one of alkaline earth metals selected from magnesium, calcium, barium and strontium and a titanium dioxide particle at a temperature of 60°C or higher so that the alkaline earth metal is complexed with the titanium dioxide to form a composite compound on the surface of the titanium dioxide particle in an amount of 0,1- 20% by weight based on the weight of the titanium dioxide pigment particle in terms of oxide of the alkaline earth metal.

The titanium dioxide pigment particle of the invention is inhibited in photocatalytic activity as well as reduced in amount of volatile water which it originally possesses so that the pigment particle can be suitably used as a pigment for paint compositions or resin compositions requiring high weather resistance and light fastness.

That is, in contrast to paint compositions and resin compositions containing conventional titanium dioxide pigments, paint compositions and resin compositions containing the titanium dioxide pigment particle of the invention have excellent weather resistance and light fastness and further have excellent resistance to hydrolysis.

Brief Description of the Drawings

Fig. 1 shows a scanning electron microscope (SEM) photograph of a cross section of the titanium dioxide pigment particle of the invention obtained by using anatase titanium dioxide;

Fig. 2 shows a result of line analysis of titanium element of the titanium dioxide pigment particle of the invention;

Fig. 3 shows a result of line analysis of barium element of the titanium dioxide pigment particle of the invention;

Fig. 4 shows a powder X-ray diffraction pattern of the titanium dioxide pigment particle of the invention;

Fig. 5 shows a powder X-ray diffraction pattern of anatase titanium dioxide used as raw material for producing the titanium dioxide pigment of the invention;

Fig. 6 shows a powder X-ray diffraction pattern of barium titanate particle;

Fig. 7 shows a powder X-ray diffraction pattern of the titanium dioxide pigment particle of the invention obtained by using rutile titanium dioxide; and

Fig. 8 shows a powder X-ray diffraction pattern of rutile titanium dioxide used as raw material for producing the titanium dioxide pigment of the invention.

Description of Embodiments

The titanium dioxide pigment particle of the invention has on the surface thereof a composite compound of alkaline earth metal complexed with the titanium dioxide in an amount of 0.1-20% by weight based on the weight of the titanium dioxide pigment particle in terms of oxide of the alkaline earth metal, wherein the composite compound is obtained by heating a compound of at least one of alkaline earth metals selected from magnesium, calcium, barium and strontium and a titanium dioxide particle at a temperature of 60°C or higher so that the alkaline earth metal is complexed with the titanium dioxide on the surface of the titanium dioxide pigment particle.

Such a titanium dioxide pigment particle is produced by heating a compound of at least one of alkaline earth metals selected from magnesium, calcium, barium and strontium and a titanium dioxide particle at a temperature of 60°C or higher so that the alkaline earth metal is complexed with the titanium dioxide to form a composite oxide on the surface of the particle in an amount of 0.1-20% by weight based on the weight of the titanium dioxide pigment particle in terms of weight of oxide of the alkaline earth metal.

In the method for producing a titanium dioxide pigment particle according to the invention, the manufacturing method, and shape, crystal form and particle diameter of titanium dioxide particles used as starting material are not specifically limited. For example, titanium dioxide particles used as starting material may be produced either by a sulfuric acid method or by a chlorine method. The raw material of titanium dioxide is not specifically limited and may be metatitanic acid or titanium tetrachloride. Furthermore, the shape of titanium dioxide particles used as starting material may be spherical or acicular, and the crystal form may be rutile or anatase.

The particle size of titanium dioxide particles used as starting material may also be properly selected depending on an application and demand characteristics. For example, titanium dioxide particles generally used for paint, resin or the like have a primary particle diameter of 0.1 to 0.5 $\mu$m measured by any method such as an electron microscope method, a specific surface area method or an X-ray diffraction method. On the other hand, visible light responsible ultrafine particles for ultraviolet ray shielding generally have a primary particle diameter of 0.01 to 0.1 $\mu$m. When the titanium dioxide pigment according to the invention is used in paint, resin or the like, it is preferred that titanium dioxide particles used as starting material generally have an average primary particle diameter ranging from 0.1 to 0.5 $\mu$m.

Furthermore, the primary particles of titanium dioxide particles used as starting material are not specifically limited and may contain, depending on an application and demand characteristics, elements other than titanium, for example, alkali metals, alkaline earth metals, aluminum, silicon, phosphorus, sulfur, zinc, tin, antimony, various transition metals such as zirconium and manganese, and various rare earth elements such as yttrium and lanthanum, for example, in the form of a compound or solid solution.

As mentioned above, a compound of at least one of alkaline earth metals selected from magnesium, calcium, barium and strontium and a titanium dioxide particle are heated so that the alkaline earth metal is complexed with the titanium dioxide to form a composite compound on the surface of the titanium dioxide particle, thereby the titanium dioxide pigment particle of the invention is obtained. The compound of alkaline earth metal used is not specifically limited, and hydroxides are preferable examples of the compound of alkaline earth metal used. Furthermore, water soluble salts such as chlorides or nitrates are also preferable examples of the compound of alkaline earth metal. When such water soluble salts are used as the compound of alkaline earth metal, they are preferably used in combination with an alkali metal hydroxide such as sodium hydroxide or an alkaline earth metal hydroxide such as magnesium hydroxide. The combinational use of the water soluble salt of alkaline earth metal with the alkali metal hydroxide or alkaline earth metal hydroxide makes reaction conditions alkaline, so that the complexing reaction of alkaline earth metal and titanium dioxide can be accelerated. Accordingly, for example, a reaction temperature can be lowered or a reaction time can be shortened.

Furthermore, a compound of at least one of alkaline earth metals and a titanium dioxide particle are heated at a temperature of 60°C or higher so that the alkaline earth metal is complexed with titanium dioxide to form a composite compound on the surface of the titanium dioxide particle in a predetermined amount, thereby the titanium dioxide pigment particle is obtained according to the invention. Hereupon, a compound of an alkaline earth metal and a titanium dioxide particle may be heated either by using a solid phase method wherein a dry mixture of the compound of an alkaline earth metal and a titanium dioxide particle are heated together, or by using a wet method wherein a compound of an alkaline earth metal and a titanium dioxide particle are heated together in a suitable solvent.

When the wet method is employed, a compound of an alkaline earth metal and a titanium dioxide particle may be heated in a suitable solvent, for example, under ambient pressure in water at a temperature of 100°C or less, or may be heated hydrothermally under pressure in the presence of water at a temperature higher than 100°C. In either case where a compound of an alkaline earth metal and a titanium dioxide particle are heated under ambient pressure or under hydrothermal conditions, water is usually used as a preferred solvent. However, aqueous solutions of alcohols or other water soluble organic compounds may also be used as a solvent.

According to the invention, a compound of an alkaline earth metal and a titanium dioxide particle is heated at a temperature of 60°C or higher. When the heating temperature is less than 60°C, the alkaline earth metal cannot be sufficiently complexed with the titanium dioxide on the surface of the titanium dioxide particle so that the desired titanium dioxide pigment particle having inhibited photocatalytic activity cannot be obtained. The upper limit of temperature for heating a compound of an alkaline earth metal and a titanium dioxide particle is not specifically limited, but when the solid phase method is used, it is generally about 1200°C. In turn, when the wet method, in particular, the hydrothermal method is employed, it is generally about 300°C because the higher heating temperature needs a more complicated and expensive reaction apparatus.

In particular, when the solid phase method is used, the heating temperature is preferably in a range from 600 to 1200°C. When the wet method is used, in the case that water is used as a solvent under ambient pressure, the heating temperature is preferably in a range from 60 to 100°C, and in the case of the hydrothermal method is used, the heating temperature is preferably in a range from 110 to 300°C.

According to the invention, the appropriate selection of the reaction conditions, for example, the kind and amount of compound of alkaline earth metal used and the temperature, pressure and time while heating the compound of alkaline earth metal and a titanium dioxide particle makes it possible to control the amount of the alkaline earth metal complexed with titanium dioxide on the surface of the titanium dioxide particle.

In this manner, a compound of an alkaline earth metal compound and a titanium dioxide particle are heated and reacted so that the alkaline earth metal is complexed with the titanium dioxide on the surface of the titanium dioxide particle. Then the obtained reaction product is washed with water to remove excess compound of alkaline earth metal, and then dried and pulverized thereby providing the titanium dioxide pigment particle of the invention.

According to the invention, the amount of alkaline earth metal complexed with titanium dioxide in the titanium dioxide pigment particle thus obtained is in a range from 0.1 to 20% by weight, preferably in a range from 1 to 10% by weight, based on the weight of the titanium dioxide pigment particle obtained in terms of oxide of the alkaline earth metal. When the amount of alkaline earth metal complexed with titanium dioxide is less than 0.1% by weight based on the weight of the titanium dioxide pigment particle in terms of oxide of the alkaline earth metal, the photocatalytic activity of the resulting titanium dioxide particles is not sufficiently inhibited. On the other hand, when the amount of the alkaline earth metal complexed with titanium dioxide is more than 20% by weight based on the weight of the titanium dioxide pigment p article in terms of oxide of the alkaline earth metal, the content of titanium dioxide in the obtained titanium dioxide pigment particle is relatively reduced so that desired characteristics such as tinting strength which a titanium dioxide pigment originally has are reduced.

A fluorescent X-ray analysis shows that the titanium dioxide pigment particle thus obtained according to the invention contains an alkaline earth metal element, and a scanning electron microphotograph shows that the titanium dioxide pigment particle has titanium element in the core and has an alkaline earth metal element on the surface.

Furthermore, an X-ray diffraction analysis shows that the titanium dioxide pigment particle of the invention has an X-ray diffraction pattern of titanium dioxide as well as an X-ray diffraction pattern of a composite compound of an alkaline earth metal and titanium dioxide, namely, a composite oxide containing an alkaline earth metal element and titanium element. For example, when titanium dioxide particles are treated with barium hydroxide as a compound of an alkaline earth metal, the resulting titanium dioxide pigment particle has barium titanate ($BaTiO_3$) and barium orthotitanate ($Ba_2TiO_4$) as composite oxides formed by complexing the alkaline earth metal with the titanium dioxide on the surface of the particles.

The titanium dioxide pigment particle of the invention has a composite compound of an alkaline earth metal and titanium dioxide on the surface as mentioned above so that it is inhibited in photocatalytic activity. Furthermore, in contrast to conventional surface treatments of titanium dioxide particles, the titanium dioxide pigment particle obtained according to the invention has a reduced amount of volatile water.

As necessary, the titanium dioxide pigment particle of the invention may be further subjected to conventionally known surface treatments with inorganic compounds or organic compounds in addition to the complexing on the surface thereof of an alkaline earth metal with titanium dioxide as described above,. Examples of such conventional surface treatment with inorganic compounds include a surface treatment with a hydrous oxide of silicon, aluminum, zirconium or the like.

The titanium dioxide pigment particle of the invention is inhibited in photocatalytic activity as well as reduced in amount of volatile water, and consequently, the pigment can be suitably used for a paint composition or resin composition requiring high weather resistance. A paint composition or resin composition containing the titanium dioxide pigment of the invention has excellent weather resistance in contrast to a paint composition or resin composition containing a conventional titanium dioxide pigment. Furthermore, a resin composition containing the titanium dioxide pigment of the invention is refrained from deterioration of resin properties such as melt viscosity caused by resin hydrolysis.

Suitable application examples of the titanium dioxide pigment particle of the invention include, but are not limited to, a pigment component for a paint composition whose resin component is polyester resin, urethane resin, alkyd resin, acrylic resin, melamine resin, fluorine resin or the like.

Further suitable application examples of the titanium dioxide pigment of the invention include, but are not limited to, a pigment component for thermoplastic resins such as polyolefin resin, polyester resin, polystyrene resin, polyamide resin, polycarbonate resin and ABS resin and for thermosetting resins such as melamine resin, epoxy resin and alkyd resin.

Examples

The invention will be explained with reference to examples, but the invention is not intended to be limited to the examples.

The amount of alkaline earth metal contained in the titanium dioxide pigment obtained, the crystal structure of the titanium dioxide pigment obtained, and amount of volatile water contained in the titanium dioxide pigment obtained in each Example and Comparative Example were measured in the following manner.

Furthermore, the titanium dioxide pigment obtained in each Example and Comparative Example was mixed with a paint composition to examine the weather resistance (gloss retention of coating) in the following manner, and a polyethylene film containing the titanium dioxide pigment obtained in each Example and Comparative Example was also prepared to examine the surface property in the following manner. In addition, a polyethylene terephthalate sheet containing the titanium dioxide pigment obtained in each Example and Comparative Example was prepared to examine the light fastness in the following manner. The results arc shown in Tables 1 and 2.

(Amount of Alkaline Earth Metal Contained in Titanium Dioxide Pigment)

The amount of an alkaline earth metal contained in the titanium dioxide pigment particle obtained was determined in terms of oxide of the alkaline earth metal using a fluorescence X-ray analyzer (ZSX primus II manufactured by Rigaku Corporation).

(Crystal Structure of Composite Compound)

The crystal structure of the titanium dioxide pigment particle obtained in each Example and Comparative Example was analyzed with a X-ray diffractometer (RINT 2200 manufactured by Rigaku Corporation) to examine the presence of the peak derived from titanium dioxide and the peak derived from the composite compound of titanium dioxide and an alkaline earth metal.

(Amount of Volatile Water)

A titanium dioxide pigment was heated and dehydrated at 105°C for 2 hours with an electric furnace, and the weight ($W_1$) was measured. Then, the pigment was heated again at 900°C for 1 hour, and the weight ($W_2$) was measured. The amount of volatile water was calculated from the following formula:

$$\text{Amount of volatile water} = \{(W_1 - W_2)/W_1\} \times 100 \ (\%)$$

(Surface Property of Film)

30% by weight of a titanium dioxide pigment was blended to 70% by weight of a polyethylene resin (Sumikathene F412-1 manufactured by Sumitomo Chemical Co., Ltd.). The mixture was heated and kneaded with a Labo Plastomill single screw extruder (manufactured by Toyo Seiki Seisaku-Sho, Ltd., a shaft length of 20 mm) and then molded with a T die molding machine (manufactured by Toyo Seiki Seisaku-Sho, Ltd.) at a molding temperature of 300°C to obtain a film having a thickness of 30 μm.

The surface property of the film was evaluated by visual observation of surface lacing and the like. Evaluation was "A" when little lacing, foaming or the like was observed, and evaluation was "B" when marked lacing, foaming or the like was observed. "Lacing" means a defective molding phenomenon in which a volatile component such as water in titanium dioxide blended in a resin as a pigment volatilizes while film forming to form lacy holes in the obtained film. When the amount of a volatile component is large in a titanium dioxide pigment blended in a resin, such lacing easily occurs in the obtained film.

(Light Fastness of Resin Composition)

2% by weight of titanium dioxide pigment obtained in each of Example and Comparative Example was blended to 98% by weight of polyethylene terephthalate resin (TR-8550T manufactured by Teijin Chemicals Ltd.). The mixture was heated and kneaded with an injection molding machine (SH-50 manufactured by Sumitomo Heavy Industries, Ltd.) to mold a sheet having a thickness of 3.0 mm. The sheet was exposed to ultraviolet irradiation for 48 hours with a fade meter (manufactured by Suga Test Instruments Co., Ltd.), and the difference of brightness W value ($\Delta$W) between an irradiated part and an unirradiated part was measured by using a colorimeter (SE 2000 manufactured by Nippon Denshoku Industries Co., Ltd.).

In the above measurement, the brightness W in the Lab color system was calculated from the following formula:

$$W = 100 - \{(100 - L)^2 + a^2 + b^2\}^{1/2}$$

wherein L is lightness, a is saturation, and b is hue.

(Weather Resistance of Paint Composition)

Using a titanium dioxide pigment obtained in each Example and Comparative Example, and a mixture of polyester resin and melamine resin (M6602 and J820, respectively, manufactured by Dainippon Ink And Chemicals, Inc.), a paint having a pigment weight concentration of 37.5% was prepared. The paint was applied on a bonderized steel sheet with a bar coater Rod No. 60. The plate was then baked at 150°C for 30 minutes using a dryer (manufactured by Toyo Engineering Works, Ltd.). The painted plate was subjected to accelerated exposure test with a sunshine weather meter using carbon arc (manufactured by Suga Test Instruments Co., Ltd.). The condition was a rainfall period of 12 minutes in a 60 minutes carbon arc irradiation period.

An initial gloss before exposure test and a gloss after 800 hours exposure were measured at 60° with a gloss meter (manufactured by Murakami Color Research Laboratory), and the weather resistance was evaluated as gloss retention with respect to the initial gloss. The gloss retention was calculated from the following formula:

$$\text{Gloss retention} = \text{(gloss after 800 hours exposure)} / \text{(initial gloss before exposure test)}$$

(Tinting Strength of Titanium Dioxide Pigment)

A mixture composed of 5000 parts by weight of low density polyethylene resin (Sumikathene F412-1 manufactured by Sumitomo Chemical Co., Ltd.), 100 parts by weight of titanium dioxide pigment obtained in each Example and Comparative Example and one part by weight of carbon black (MA-100 manufactured by Mitsubishi Chemical Corporation) was melted and kneaded at 110°C with a test roll mill (NS-90 manufactured by Nishimura Machinery Co., Ltd.), and then molded into a sheet having a thickness of 0.5 mm with a hydraulic molding machine (TBD-30-2 manufactured by Toho Machinery Co., Ltd.).

Lightness L in the Lab color system of each sheet obtained was measured with a colorimeter (SE2000 manufactured by Nippon Denshoku Industries Co., Ltd), and the differences of lightness ($\Delta$L) between the sheet using the titanium dioxide pigment according to Example 1 and the sheets using the titanium dioxide pigments according to the other Examples and Comparative Examples were calculated.

Then, letting the lightness of the sheet using the titanium dioxide pigment according to Example 1 be 100, the tinting strength of titanium dioxide pigment in each of the other sheets was calculated from the following formula:

$$\text{Tinting strength} = 100 + \Delta L \times 100$$

A. Production of Anatase Titanium Dioxide Pigment and Its Performance

In each Example and Comparative Example described below, the average primary particle diameter of titanium dioxide was adjusted by using anatase titanium dioxide A110 manufactured by Sakai Chemical Industry Co., Ltd. as the basis.

Example 1

75 g of anatase titanium dioxide adjusted to an average primary particle diameter of 0.15 $\mu$m and 48 g of barium hydroxide octahydrate were added to water to make a total volume of 750 mL. The mixture was placed in an autoclave having an internal volume of 1 L and reacted with thorough stirring at a temperature of 150°C and a pressure of 0.4 MPa for 5 hours.

The resulting aqueous slurry containing the reaction product obtained was adjusted to pH 5.5 with aqueous acetic acid, filtered using a Buchner funnel to remove excess alkaline earth metal ions, and then washed with water until the conductivity of filtrate became 100 $\mu$S or lower to remove remaining water soluble salts. The cake obtained in this manner was dried at 105°C to remove water, and then pulverized using a jet mill to obtain a titanium dioxide pigment.

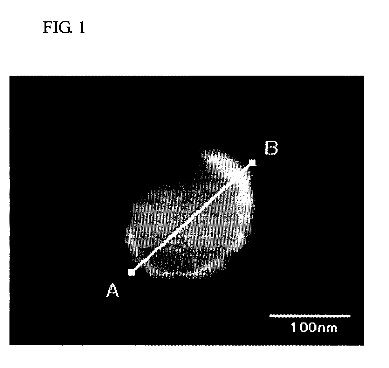

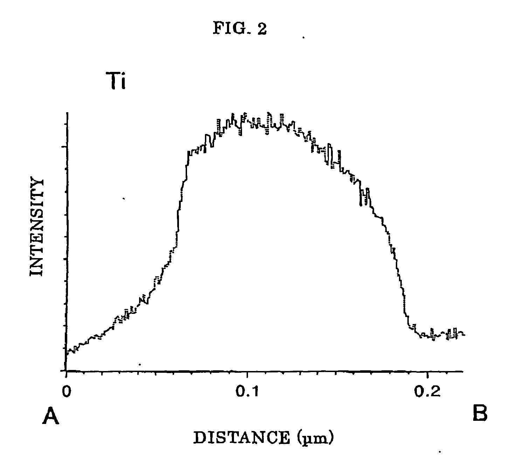

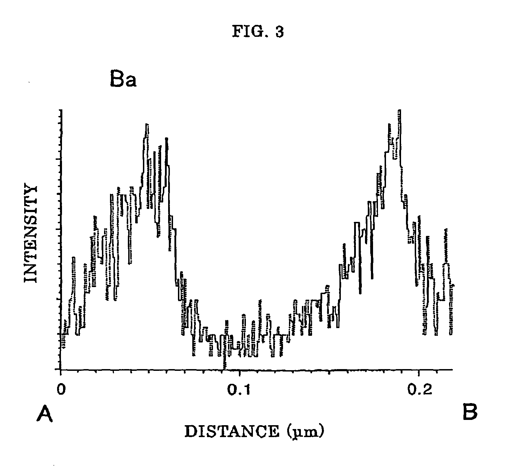

The titanium dioxide pigment particle obtained in this manner was covered with epoxy resin, the pigment particle was cut down with a cross-section sample preparation equipment, and the cross section was observed under a scanning electron microscope (SEM) to obtain an electron image as well as subjected to a wavelength dispersive line analysis. Fig. 1 shows an SEM image of the cross section of titanium dioxide pigment particle, Fig. 2 shows a result of line analysis of titanium element of titanium dioxide pigment particle, and Fig. 3 shows a result of line analysis of barium element. The results of the line analysis show that barium element is found on the surface of pigment particle, but not found in the core.

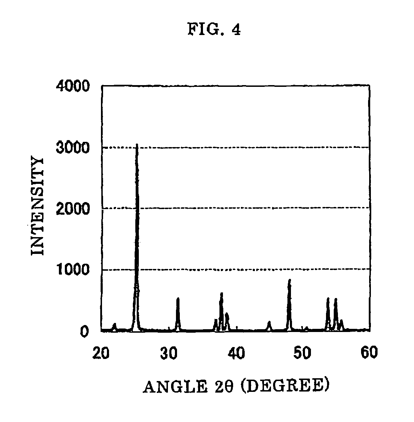

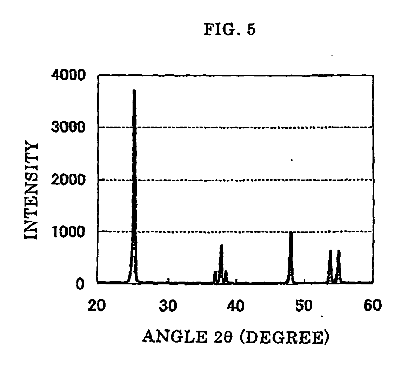

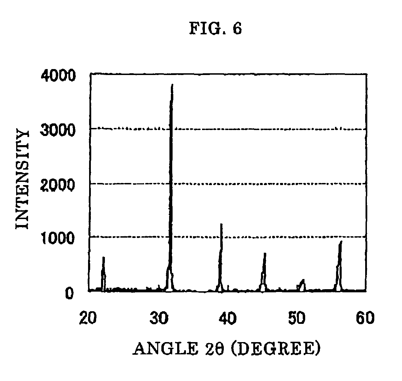

Fig. 4 shows a powder X-ray diffraction pattern of the titanium dioxide pigment obtained above, Fig. 5 shows a powder X-ray diffraction pattern of anatase titanium dioxide used as the raw material, and Fig. 6 shows a powder X-ray diffraction pattern of barium titanate particles.

As shown in Fig. 5, anatase titanium dioxide has a diffraction peak at $2\theta = 25.3°$, and as shown in Fig. 6, barium titanate has a diffraction peak at $2\theta = 31.4°$. The titanium dioxide pigment obtained according to the invention has the diffraction peak at $2\theta = 25.3°$ derived from anatase titanium dioxide as well as the diffraction peak at $2\theta = 31.4°$ derived from barium titanate.

Therefore, it is shown that the titanium dioxide pigment obtained according to the invention has on the surface barium titanate which is a composite compound formed by complexing of barium with titanium dioxide.

Example 2

100 g of anatase titanium dioxide adjusted to an average primary particle diameter of 0.15 $\mu$m and 70 g of barium hydroxide octahydrate were added to water to make a total volume of 2 L. The mixture was placed in a three necked flask having an internal volume of 3 L and reacted with thorough stirring under nitrogen gas atmosphere at a temperature of 100°C under ambient pressure for 24 hours. The resulting aqueous slurry containing the reaction product obtained was treated in the same manner as in Example 1 to obtain a titanium dioxide pigment.

Example 3

100 g of anatase titanium dioxide adjusted to an average primary particle diameter of 0.15 $\mu$m, 70 g of barium hydroxide octahydrate and 60 mL of 30% by weight aqueous solution of sodium hydroxide were added to water to make a total volume of 2 L. The mixture was placed in a three necked flask having an internal volume of 3 L and reacted with thorough stirring under nitrogen gas atmosphere at a temperature of 60°C under ambient pressure for 24 hours. The resulting aqueous slurry containing the reaction product obtained was treated in the same manner as in Example 1 to obtain a titanium dioxide pigment.

Example 4 .

75 g of anatase titanium dioxide adjusted to an average primary particle diameter of 0.15 $\mu$m, 13 g of anhydrous strontium chloride and 30 mL of 30% by weight aqueous solution of sodium hydroxide were added to water to make a total volume of 750 mL. The mixture was placed in an autoclave having an internal volume of 1 L and reacted with thorough stirring at a temperature of 150°C and a pressure of 0.4 MPa for 5 hours. The resulting aqueous slurry containing the reaction product obtained was treated in the same manner as in Example 1 to obtain a titanium dioxide pigment.

Example 5

75 g of anatase titanium dioxide adjusted to an average primary particle diameter of 0.20 $\mu$m, 12 g of calcium chloride dihydrate and 17 mL of 30% by weight aqueous solution of sodium hydroxide were added to water to make a total volume of 750 mL. The mixture was placed in an autoclave having an internal volume of 1 L and reacted with thorough stirring at a temperature of 150°C and a pressure of 0.4 MPa for 5 hours. The resulting aqueous slurry containing the reaction product obtained was treated in the same manner as in Example 1 to obtain a titanium dioxide pigment.

Example 6

10 mL of an aqueous solution containing 7 g of magnesium chloride hexahydrate was mixed with 50 g of anatase titanium dioxide adjusted to an average primary particle diameter of 0.20 $\mu$m. The resulting mixture was dried at 105°C, then heated to 900°C at a rate of 200°C/hour under air atmosphere, kept for 2 hours at the temperature, and then cooled to room temperature at a rate of 300°C/hour.
The powder obtained in this manner was pulverized using an automated mortar, repulped in aqueous acetic acid adjusted to pH 5.5, filtered using a Buchner funnel to remove excess alkaline earth metal ions, and then washed with water until the conductivity of filtrate became 100 $\mu$S or less to thoroughly remove remaining water soluble salts. Then the cake was dried at 105°C to remove water, and then pulverized with a jet mill to obtain a titanium dioxide pigment.

Comparative Example 1

Anatase titanium dioxide adjusted to an average primary particle diameter of 0.15 $\mu$m was used as a titanium dioxide pigment according to Comparative Example 1.

Comparative Example 2

Anatase titanium dioxide adjusted to an average primary particle diameter of 0.15 $\mu$m was made to an aqueous slurry having a concentration of 400 g/L. With thorough stirring, an aqueous solution of sodium aluminate was added to the slurry in an amount of 1.5% by weight in terms of alumina in relation to the titanium dioxide, and then adjusted to pH 7.0 with sulfuric acid. The obtained slurry was filtered and washed with water to remove water soluble salts. The obtained cake was dried at 105°C and pulverized with a jet mill to obtain titanium dioxide pigment particles having on the surface 1.5% by weight of hydrous oxide of aluminum in terms of oxide.

Comparative Example 3

100 g of anatase titanium dioxide adjusted to an average primary particle diameter of 0.15 $\mu$m and 5 g of barium hydroxide octahydrate were added to water to make a total volume of 2 L. The mixture was placed in a three necked flask having an internal volume of 3 L and reacted with thorough stirring under nitrogen gas atmosphere at a temperature of 90°C under ambient pressure for 5 hours. The resulting aqueous slurry containing the reaction product obtained was treated in the same manner as in Example 1 to obtain a titanium dioxide pigment.

Table 1

| | Heating condition | Amount of alkaline earth metal (% by weight in terms of oxide) | Crystal structure of composite compound | Gloss retention | Surface property of film | Light fastness of resin composition | Amount of volatile water (% by weight) | Tinting Strength |
|---|---|---|---|---|---|---|---|---|
| Example 1 | Ba/160°C x 5h/ hydrothermal | 19.0 | $BaTiO_3$ | 0.43 | A | ·1.0 | 0.29 | 100 |
| Example 2 | Ba/100°C x 24h/ ambient pressure | 4.3 | $BaTiO_3$ | 0.39 | A | -3.2 | 0.19 | 117 |
| Example 3 | Ba/NaOH/60°C x 24h/ambient pressure | 1.0 | $BaTiO_3$ | 0.24 | A | -3.6 | 0.20 | 120 |
| Example 4 | Sr/NaOH/ 150°C x 5h/ hydrothermal | 9,0 | $SrTiO_3$ | 0.38 | A | ·3.3 | 0.29 | 109 |
| Example 5 | Ca/NaOH/ 150°C x 5h/ hydrothermal | 3.0 | $CaTiO_3$ | 0.32 | A | -3.4 | 0.26 | 118 |
| Example 6 | Mg/900°C x 2 h/ solid phase | 2.3 | $MgTiO_3$ | 0.30 | A | -3.5 | 0.18 | 119 |
| Comparative Example 1 | (Anatase $TiO_2$) | - | None | 0.02 | A | -5.0 | 0.45 | 120 |
| Comparative Example 2 | (Alumina coated anatase $TiO_2$) | - | None | 0.08 | B | -4.7 | 1.16 | 123 |
| Comparative Example 3 | Ba/90°C x 5 h/ ambient pressure | 0.08 | None | 0.15 | A | -4.5 | 0.23 | 120 |

The anatase titanium dioxide pigment of the invention has inhibited photocatalytic activity as compared with commonly known anatase titanium dioxide, and as a result, a paint composition containing the anatase titanium dioxide pigment of the invention provides coating film having high gloss retention and excellent weather resistance. In addition, a polyethylene terephthalate resin sheet containing the anatase titanium dioxide pigment of the invention has excellent light fastness.

Furthermore, the anatase titanium dioxide pigment of the invention has a small amount of volatile water. For example, as compared with a conventionally known titanium dioxide pigment covered with hydrous oxide of aluminum, the amount of volatile water is significantly reduced. Accordingly, a polyethylene film containing the anatase titanium dioxide pigment of the invention has no lacing and foaming on the surface and has excellent surface property.

When the amount of alkaline earth metal complexed with titanium dioxide on the surface of titanium dioxide particles is less than 0.1% by weight in terms of oxide, the photocatalytic activity of titanium dioxide particles is not completely inhibited. Thus, a paint composition containing a pigment composed of such titanium dioxide particles provides coating film having low gloss retention and poor weather resistance, and furthermore, a polyethylene terephthalate resin sheet containing such a pigment has poor light fastness.

Anatase titanium dioxide particle having on the surface coating of hydrous oxide of aluminum has large amount of volatile water so that a polyethylene film containing a pigment composed of such titanium dioxide has poor surface property.

B. Production of Rutile Titanium Dioxide Pigment and Its Performance

In each Example and Comparative Example described below, the average primary particle diameter of titanium dioxide was adjusted by using rutile titanium dioxide R310 manufactured by Sakai Chemical Industry Co., Ltd. as the basis.

Example 1

100 g of rutile titanium dioxide adjusted to an average primary particle diameter of 0.18 $\mu$m, 63 g of barium hydroxide octahydrate and 60 mL of 30% by weight aqueous solution of sodium hydroxide were added to water to make a total volume of 1 L. The mixture was placed in a three necked flask having an internal volume of 3 L and reacted with thorough stirring under nitrogen gas atmosphere at a temperature of 90°C under ambient pressure for 5 hours.

The resulting aqueous slurry containing the reaction product obtained was adjusted to pH 5.5, filtered using a Buchner funnel to remove excess alkaline earth metal ions, and then washed with water until the conductivity of filtrate became 100 $\mu$S or less to remove remaining water soluble salts. The cake obtained in this manner was dried at 105°C to remove water, and then pulverized using a jet mill to obtain a titanium dioxide pigment.

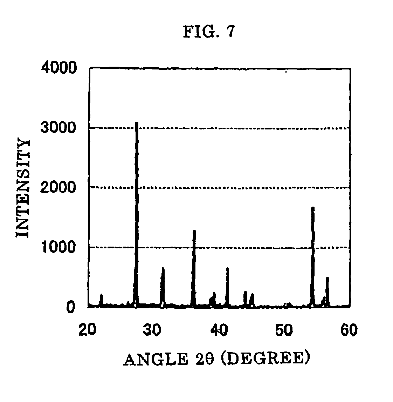

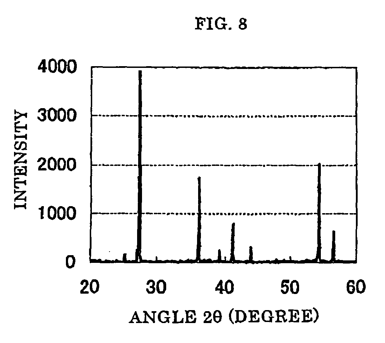

Fig. 7 shows a powder X-ray diffraction pattern of the titanium dioxide pigment obtained in this manner, and Fig. 8 shows a powder X-ray diffraction pattern of rutile titanium dioxide used as the raw material.

As shown in Fig. 8, rutile titanium dioxide has a diffraction peak at 2θ = 27.4°, and as described above, barium titanate has a diffraction peak at 2θ = 31.4°, as shown in Fig. 6. The titanium dioxide pigment particle obtained according to the invention has the diffraction peak at 2θ = 27.4° derived from rutile titanium dioxide as well as the diffraction peak at 2θ = 31.4° derived from barium titanate.

Thus, it is shown that the titanium dioxide pigment particle obtained according to the invention has on the surface barium titanate formed by complexing of barium element with titanium dioxide.

Example 2

75 g of rutile titanium dioxide adjusted to an average primary particle diameter of 0.26 $\mu$m and 5 g of barium hydroxide octahydrate were added to water to make a total volume of 750 mL. The mixture was placed in an autoclave having an internal volume of 1 L and reacted with thorough stirring at a temperature of 120°C and a pressure of 0.2 MPa for 5 hours. The resulting aqueous slurry containing the reaction product obtained was treated in the same manner as in Example 1 to obtain a titanium dioxide pigment.

Example 3

75 g of rutile titanium dioxide adjusted to an average primary particle diameter of 0.26 $\mu$m, 13 g of anhydrous strontium chloride and 26 g of barium hydroxide octahydrate were added to water to make a total volume of 750 mL. The mixture was placed in an autoclave having an internal volume of 1 L and reacted with thorough stirring at a temperature of 150°C and a pressure of 0.4 MPa for 5 hours. The resulting aqueous slurry containing the reaction product obtained was treated in the same manner as in Example 1 to obtain a titanium dioxide pigment.

Example 4

10 mL of an aqueous solution containing 35 g of barium hydroxide octahydrate was mixed with 50 g of rutile titanium dioxide adjusted to an average primary particle diameter of 0.20 $\mu$m. The resulting mixture was dried at 105°C, then heated to 600°C at a rate of 200°C/hour under air atmosphere, kept for 4 hours at the temperature, and then cooled to room temperature at a rate of 300°C/hour.

The powder obtained in this manner was pulverized using an automated mortar, repulped in aqueous acetic acid adjusted to pH 5.5, filtered using a Buchner funnel to remove excess alkaline earth metal ions, and further washed with water until the conductivity of filtrate became 100 $\mu$S or less to thoroughly remove remaining water soluble salts. Then the cake was dried at 105°C to remove water, and then pulverized using a jet mill to obtain a titanium dioxide pigment.

Comparative Example 1

Rutile titanium dioxide adjusted to an average primary particle diameter of 0.20 $\mu$m was used as a titanium dioxide pigment according to Comparative Example 1.

Comparative Example 2

85 g of rutile titanium dioxide adjusted to an average primary particle diameter of 0.20 $\mu$m was mixed with 15 g of barium titanate, and the resulting mixture was used as a titanium dioxide pigment according to Comparative Example 2.

Comparative Example 3

Rutile titanium dioxide adjusted to an average primary particle diameter of 0.26 $\mu$m was made to an aqueous slurry having a concentration of 400 g/L. With thorough stirring, an aqueous solution of sodium aluminate was added to the slurry in an amount of 2.3% by weight in terms of alumina in relation to the titanium dioxide, and then adjusted to pH 7.0 with sulfuric acid. The obtained slurry was filtered and washed with water to remove water soluble salts. The obtained cake was dried at 105°C and pulverized with a jet mill to obtain a titanium dioxide pigment particle having on the surface 2.3% by weight of hydrous oxide of aluminum in terms of oxide.

Comparative Example 4

75 g of rutile titanium dioxide adjusted to an average primary particle diameter of 0.20 $\mu$m and 53 g of barium hydroxide octahydrate were added to water to make a total volume of 750 mL. The mixture was placed in an autoclave having an internal volume of 1 L and reacted with thorough stirring at a temperature of 150°C and a pressure of 0.4 MPa for 5 hours. The resulting aqueous slurry containing the reaction product obtained was treated in the same manner as in Example 1 to obtain a titanium dioxide pigment.

Table 2

| | Heating condition | Amount of alkaline earth metal (% by weight as converted to oxide) | Crystal structure of composite compound | Gloss retention | Surface property of film | Light fastness of resin composition | Amount of volatile water (% by weight) | Tinting Strength |
|---|---|---|---|---|---|---|---|---|
| Example 1 | Ba/NaOH/90°C x 5 h/ambient pressure | 3.6 | BaTiO$_3$ BaTiO$_3$ | 0.68 | A | 0.4 -0.4 | 0.16 | 100 |
| Example 2 | Ba/120°C x 5h/ hydrothermal | 0.3 | BaTiO$_3$ | 0.64 | A | -1.0 | 0.12 | 101 |
| Example 3 | Ba + Sr/150°C x 5h/ hydrothermal | 10.0 | BaTiO$_3$+SrTiO$_3$ BaTiO$_3$+SrTiO$_3$ | 0.71 | A | -0.8 | 0.44 | 93 |
| Example 4 | Ba/600°C x 4h/ solid phase | 6.2 | BaTiO$_3$ | 0.70 | A | -0.6 | 0.12 | 95 |
| Comparative Example 1 | (rutile TiO$_2$) | - | None | 0.48 | A | -1.5 | 0.33 | 102 |
| Comparative Example 2 | (rutile TiO$_2$ + BaTiO$_3$) | 10.0 | None | 0.47 | A | -1.8 | 0.35 | 94 |
| Comparative Example 3 | (alumina coated -rutile TiO$_2$) | - | None | 0.74 | B | -0.5 | 1.60 | 107 |
| Comparative Example 4 | Ba/150°C x 5h/ hydrothermal | 23.0 | BaTiO$_3$ | 0.73 | A | -0.4 | 0.20 | 65 |

The rutile titanium dioxide pigment obtained according to the invention has inhibited photocatalytic activity as compared with commonly known rutile titanium dioxide, and as a result, a paint composition containing the rutile titanium dioxide pigment provides a coating film having high gloss retention and excellent weather resistance. In addition, a polyethylene terephthalate resin sheet containing the rutile titanium dioxide pigment obtained according to the invention has excellent light fastness. However, even when a mixture of rutile titanium dioxide and barium titanate is blended to a resin, the resulting resin composition is not improved in light fastness.

Furthermore, the rutile titanium dioxide pigment obtained according to the invention has a significantly smaller amount of volatile water as compared with, for example, a conventionally known titanium dioxide pigment covered with hydrous oxide of aluminum. As a result, a polyethylene film containing the rutile titanium dioxide pigment obtained according to the invention has no lacing and foaming on the surface.

Wen the amount of alkaline earth metal complexed with titanium dioxide on the surface of titanium dioxide particle is more than 20% by weight in terms of oxide, the tinting strength which a titanium dioxide pigment originally has is reduced. Furthermore, in a similar way as in anatase titanium dioxide whose surface is covered with hydrous oxide of aluminum, rutile titanium dioxide whose surface is covered with hydrous oxide of aluminum has a large amount of volatile water so that a polyethylene film containing a pigment composed of such titanium dioxide has poor surface property.

## Claims

1. A titanium dioxide pigment particle having on the surface a composite compound of alkaline earth metal complexed with the titanium dioxide in an amount of 0.1-20% by weight based on the weight of the titanium dioxide pigment particle in terms of oxide of the alkaline earth metal, wherein the composite compound is obtainable by heating a compound of at least one of alkaline earth metals selected from magnesium, calcium, barium and strontium and a titanium dioxide particle at a temperature of 60°C or higher so that the alkaline earth metal is complexed with the titanium dioxide on the surface of the titanium dioxide pigment particle.

2. A titanium dioxide pigment particle according to claim 1, wherein the titanium dioxide particles used as starting material have an average primary particle diameter of from 0.1 to 0.5 $\mu$m.

3. A paint composition comprising the titanium dioxide pigment particle according to claim 1 or claim 2.

4. A resin composition comprising the titanium dioxide pigment particle according to claim 1 or claim 2.

5. A method for producing a titanium dioxide pigment particle which comprises heating a compound of at least one of alkaline earth metals selected from magnesium, calcium, barium and strontium and a titanium dioxide particle at a temperature of 60°C or higher so that the alkaline earth metal is complexed with the titanium dioxide to form a composite compound on the surface of the titanium dioxide particle in an amount of 0.1-20% by weight based on the weight of the titanium dioxide pigment particle in terms of oxide of the alkaline earth metal.

6. A method according to claim 5, wherein a water soluble salt of an alkaline earth metal and an alkali metal hydroxide or alkaline earth metal hydroxide are heated with the titanium dioxide particle.

7. A method according to claim 5 or claim 6, wherein a dry mixture of a compound of at least one alkaline earth metal and the titanium dioxide particle is heated.

8. A method according to claim 5 or claim 6, wherein a compound of at least one alkaline earth metal and the titanium dioxide particle are heated in a solvent under ambient pressure.

9. A method according to claim 5 or claim 6, wherein a compound of at least one alkaline earth metal and the titanium dioxide particle are treated hydrothermally under pressure.

FIG. 1

FIG. 2

FIG. 3

Ba

INTENSITY

0        0.1        0.2

A        DISTANCE (μm)        B

FIG. 4

FIG. 5

FIG. 6

FIG. 7

FIG. 8

ANGLE 2θ (DEGREE)

Europäisches
Patentamt

European
Patent Office

Office européen
des brevets

**EUROPEAN SEARCH REPORT**

Application Number

EP 09 25 2873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/092796 A2 (SHOWA DENKO KK [JP]; KUROZUMI TADATOSHI [JP]; SHIRAKAWA AKIHIKO [JP];) 6 October 2005 (2005-10-06) * page 39, line 14 - page 41, line 8; claims 1,12, 15,16, 22,27,28 * * page 27, lines 5-15 * * page 28, lines 14-18 * | 1-6,9 | INV. C09C1/36 |
| X | US 2006/223700 A1 (JUNG HYUN-SUK [KR] ET AL) 5 October 2006 (2006-10-05) * page 3, paragraphs 47,48; claims 17,18,21-23,27,29 * * page 4, paragraph 58 * * page 5; table 1 * | 1,5-7,9 | |
| X | EP 0 799 865 A2 (MERCK PATENT GMBH [DE]) 8 October 1997 (1997-10-08) * page 5, lines 23-29; claims 1,5,7-10 * * page 5, line 48 - page 6, line 4 * | 1-8 | |
| A | EP 1 277 704 A1 (SHOWA DENKO KK [JP]) 22 January 2003 (2003-01-22) * the whole document * | 1-9 | TECHNICAL FIELDS SEARCHED (IPC) |
| A | EP 1 415 955 A1 (SHOWA DENKO KK [JP]) 6 May 2004 (2004-05-06) * the whole document * | 1-9 | C09C |

The present search report has been drawn up for all claims

| Place of search | Date of completion of the search | Examiner |
|---|---|---|
| The Hague | 10 March 2010 | Gerwann, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 25 2873

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2010

| Patent document cited in search report | | Publication date | Patent family member(s) | | Publication date |
|---|---|---|---|---|---|
| WO 2005092796 | A2 | 06-10-2005 | US | 2007205389 A1 | 06-09-2007 |
| US 2006223700 | A1 | 05-10-2006 | NONE | | |
| EP 0799865 | A2 | 08-10-1997 | DE | 69715946 D1 | 07-11-2002 |
| | | | DE | 69715946 T2 | 07-08-2003 |
| | | | JP | 9272815 A | 21-10-1997 |
| | | | US | 5770310 A | 23-06-1998 |
| EP 1277704 | A1 | 22-01-2003 | AT | 423750 T | 15-03-2009 |
| | | | AU | 4882701 A | 07-11-2001 |
| | | | CN | 1426377 A | 25-06-2003 |
| | | | WO | 0181245 A1 | 01-11-2001 |
| EP 1415955 | A1 | 06-05-2004 | CN | 1630616 A | 22-06-2005 |
| | | | WO | 03004416 A1 | 16-01-2003 |
| | | | JP | 3578757 B2 | 20-10-2004 |
| | | | JP | 2008285412 A | 27-11-2008 |
| | | | TW | 238146 B | 21-08-2005 |

EPO FORM P0459

For more details about this annex : see Official Journal of the European Patent Office, No. 12/82

## REFERENCES CITED IN THE DESCRIPTION

### Patent documents cited in the description

- JP 7292276 A
- JP 7292277 A